# EUROPEAN PATENT SPECIFICATION

(11) **EP 2 425 712 B1**
(45) Date of publication and mention of the grant of the patent: **31.08.2016**
(21) Application number: 10015803.9
(22) Date of filing: 18.12.2010
(51) Int. Cl.: A01K 39/01

(54) **Squirrel resistant hopper type bird feeder**
Eichhörnchensicheres Vogelfutterhaus des Trichtertyps
Mangeoire pour oiseaux de type trémie résistant aux écureuils

(30) Priority: 07.09.2010 CA 2714252
(43) Date of publication of application: 07.03.2012
(73) Proprietor: PLC Patents and Trademarks Inc., Lac Brome, Quebec J0E 1V0 (CA)
(72) Inventor: Côté, Paul L., Knowlton, QC J0E 1V0 (CA)
(74) Representative: Glück Kritzenberger Patentanwälte PartGmbB

(56) References cited:
- DE-U1- 29 701 317
- US-A- 5 361 723
- US-A- 5 471 951
- US-A1- 2004 134 435

## Description

### FIELD OF THE INVENTION

The present invention relates to a bird feeder and more particularly, to a hopper type bird feeder.

### BACKGROUND OF THE INVENTION

Birding is one of the most popular past times in the world. The participants range from professional observers to hobbyists who will spend a day or more looking for different types of birds in the wild. Many bird enthusiasts will also feed birds at home hoping to attract certain types of birds. As a result, there are many bird feeders which are commercially available.

One problem which occurs when feeding birds is to find a way to prevent the presence of undesired animals and in particular, squirrels. Many different proposals exist in the art for squirrel resistant bird feeders and many different approaches have been taken. These approaches range from the use of baffles on a pole to a greased pole to prevent the squirrel climbing to the feeder. Other approaches have consisted of conceding that the squirrel will get to the bird feeder, but to design the feeder to be squirrel resistant such that the squirrels cannot access the feed contained therein and will eventually become discouraged. The mechanisms used for the feeder have ranged from bird feeders which will spin to throw the squirrel off the feeder to those utilizing shrouds which extend about a feed tube and which shroud will selectively permit or not permit access to the food. Typically, the shroud will move depending upon the weight placed thereon.

One of the simpler and more popular type of bird feeders are what is called a hopper type feeder. Generally, such feeders consist of a base, a pair of end walls, a pair of side walls which are spaced inwardly and upwardly from the base and a cover. To use, the cover is removed and seed is placed within a seed cavity defined by the side and end walls, the seed being permitted to go under the side walls such that access may be had, to the feed by the birds. However, this easy access also permits the squirrels to access the feed.

Typically, hopper-type bird feeders are formed of a wood material with plastic being used for specific portions thereof such as transparent walls which define a portion of the hopper. Typically, the transparent walls are angled inwardly and are spaced from the base of the feeder. They are thus easily accessible to squirrels and other marauders who will chew the walls to gain freer access to the feed.
Document US 2004/0134435 A1 discloses a hopper type bird feeder. The pair of side walls is connected by a pair of bars. The bars are provided with threaded end portions. The bars are connected with the side walls by putting the end portions of the bars through an opening in the side walls and putting a nut on the threads.
Document US 5,471,951 A also discloses a hopper type bird feeder. The bird feeder comprises a pivot rod for supporting the bird feeder on posts. The bird feeder is able to tilt about the rod axis if a pest such as a squirrel is on the bird feeder. The tilt of the feeder causes an electrical shock for frightening away the pest.

### SUMMARY OF THE INVENTION

It is therefore an object of the present invention to provide a hopper type bird feeder which includes squirrel resistant features.

It is also an object of the present invention to provide a knockdown hopper type bird feeder which may easily be disassembled for purposes of cleaning and the like.

According to one aspect of the present invention there is provided a hopper type bird feeder comprising a base having first and second ends and first and second sides, first and second end walls located proximate said first and second ends of said base, first and second side walls set inwardly of said first and second sides of said base to thereby define a feed access area between said first and second sides and said first and second side walls, said first and second side walls having at least a portion thereof spaced upwardly from said base, a structural bar extending between upper portions of said side walls, said structural bar being rotatable within openings in said side walls to move from an unlocked position to a locked position wherein said side walls are retained in a locked position wherein said side walls are engageable in slots formed on the interior facing surface of the end walls; a feed cavity defined by said base and said first and second end walls and said first and second side walls, and a seed guard extending over the feed access area, the seed guard having at least a portion thereof spaced from the base, the seed guard having apertures formed therein.

Although the bird feeder can be made of any desired material, it is preferable that it be formed of a plastic material and in particular, a plastic material which is resistant to chewing by marauders. The bird feeder is preferably easily assembled and disassembled for cleaning purposes. Thus, the bird feeder, once disassembled, may be placed in a dishwasher for cleaning. This is highly desirable since many bird feeders which are typically made of wood, are known to harbour infectious matter which can be disastrous for a bird population.

For ease of description, the bird feeder of the present invention is described as being of a generally rectangular configuration. However, it will be understood that any desired configuration may be utilized and the walls and base need not be straight or planar if so desired. Thus, where the term sides, end walls, side walls, base and cover are utilized, they may be of any form or configuration desired and each of the ends, sides or walls may in reality be a segment of a substantially continuous wall.

As aforementioned the bird feeder of the present invention is easily disassembled for cleaning purposes. In order to provide the desired rigidity to the overall structure, various locking devices may be employed to hold the components in place.

The hopper feeder of the present invention is designed so that it may be assembled and disassembled by hand without the necessity of tools or fasteners being required. This permits the feeder to be packaged in a flat knockdown state and later assembled by the end user to form its final assembled configuration which is substantially larger. The smaller dimension of a dismantled feeder packaged in a flat state reduces the amount of space required to store the feeder and to ship the feeder. This will naturally reduce the cost of warehousing and transportation of the feeder.

Maintaining a clean bird feeder is important to prevent the transmission of infection between wild birds and possibly other animals. Feeders can easily be contaminated with bird droppings. Also, the feed itself can become rancid after prolonged exposure to the elements. Thus, the bird feeders should be thoroughly cleaned on a regular basis. This has become recognized by birding enthusiasts who now understand the need for the thorough cleaning and decontamination of bird feeders. The present bird feeder allows thorough cleaning thereof because it can be easily dismantled and then reassembled by hand without the use of tools and /or special fasteners.

Ideally, all surfaces of individual parts are entirely exposed when the feeder is dismantled and thus can be completely cleaned. The feeder of the present invention is preferably made of dishwasher-safe materials and can be placed in a dishwasher for the cleaning step as well as the sanitizing step. The hopper feeder of the present invention is also preferably resistant to squirrels or other marauders gaining access to the feed. It is designed to selectively permit birds to access food with their longer slim beaks through narrow fluted openings in a seed guard. Squirrels, because of their larger and wider facial geometry, will not be permitted to access the bird seed through the relatively narrow fluted openings in a seed guard. The fluted shapes of the openings in the seed guard may be designed to be of a length and dimension so as to create enough distance between the food and guard to prevent a squirrel from accessing seed with their paws or their teeth and tongue. The use of different configurations for the openings in the seed guards permits one to control which birds may access the feed. Thus, one can control the distance between the seed guard and the seeds and one can also control the sizing of the aperture. This permits one to attract certain types of birds having beaks which can reach the food. Still further, the configuration of the perch can also be utilized in conjunction with the openings in the seed guard. The distance between the seed and the perch varies and one could size the openings in the seed guard according to the distance from the perch.

As aforementioned, the present invention discloses a hopper-type bird feeder which can be assembled and disassembled by hand without the use of tools. An interlocking system allows the creation of a hopper structure that is as rigid as a conventional hopper feeder which uses more traditional fasteners for assembly and cannot be easily dismantled.

In one embodiment of the present invention, each of the end walls have formed on the bottom thereof, capped posts, which slide into key-hole openings in the base section. The key-hole openings are preferably located so that the large portion of the key-hole opening is towards the inner part of the bird feeder and the smaller part of the key-hole opening is located towards the exterior of the base. When the capped posts are inserted into the large section of the key-hole, they are pushed outwardly and are stopped by the outer limit of the key-hole and the capped section of the post. Thus, the arrangement will prevent any upward movement while outward movement is also controlled by this arrangement. Naturally, the system can be reversed by placing the capped post on the base and the key-hole openings on a bottom wall of each of the end walls. Furthermore, other geometric shapes can produce the same effect and be utilized as appropriate.

In a preferred arrangement, one of the end walls is locked in position as described above. A second end wall will then have an upper horizontal locking member inserted in an upper portion thereof and placed in position with the upper horizontal reinforcing member extending between upper portions of the two end walls. The second end wall is then locked into position.

The upper reinforcing member is preferably arranged so that it can be rotated into an increasingly tapered section of the end walls thus tightening their position until it is locked and placed against the upper end walls. Once in place, the upper horizontal reinforcing member prevents the top end of the end walls from travelling inwardly or outwardly. Subsequently, the side walls are placed in position. In one preferred embodiment, the side walls are engageable in slots formed on the interior facing surface of the end walls. The side walls are preferably transparent in nature and the arrangement is such that a squirrel or other marauder cannot have access to any exposed edge thereof.

### BRIEF DESCRIPTION OF THE DRAWINGS

Having thus generally described the invention, reference will be made to the accompanying drawings illustrating an embodiment thereof, in which:

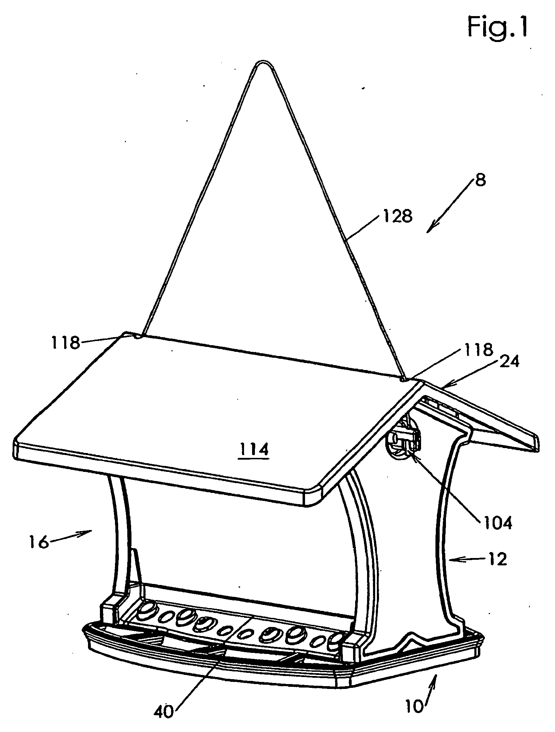

Figure 1 is a perspective view of the squirrel resistant hopper type bird feeder of the present invention;

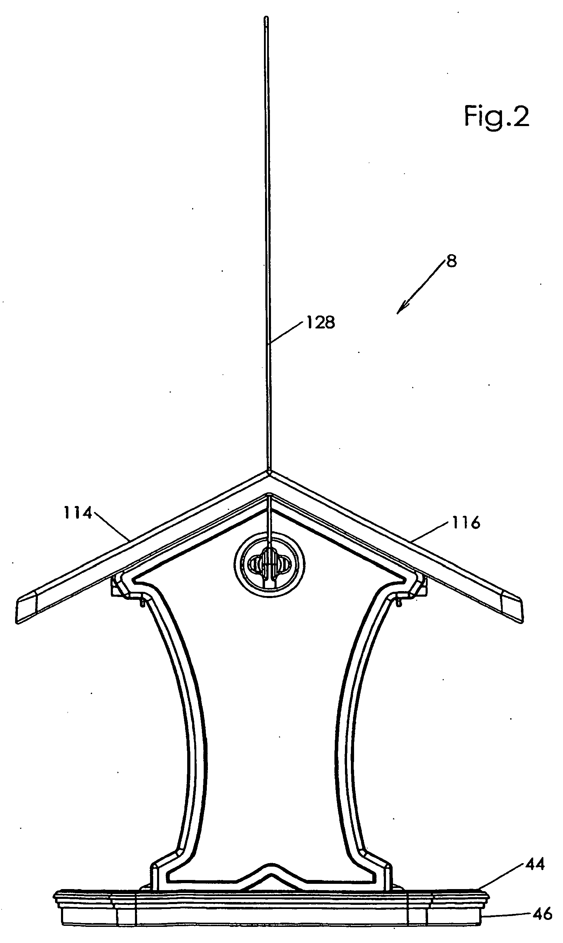

Figure 2 is an end elevational view thereof;
Figure 3 is a perspective view of the bird feeder prior to tightening of the reinforcing member and without the hanging cord;
Figure 4 is an exploded view thereof;
Figure 5 is a partial exploded view with the seed guard and end walls being secured to the base;

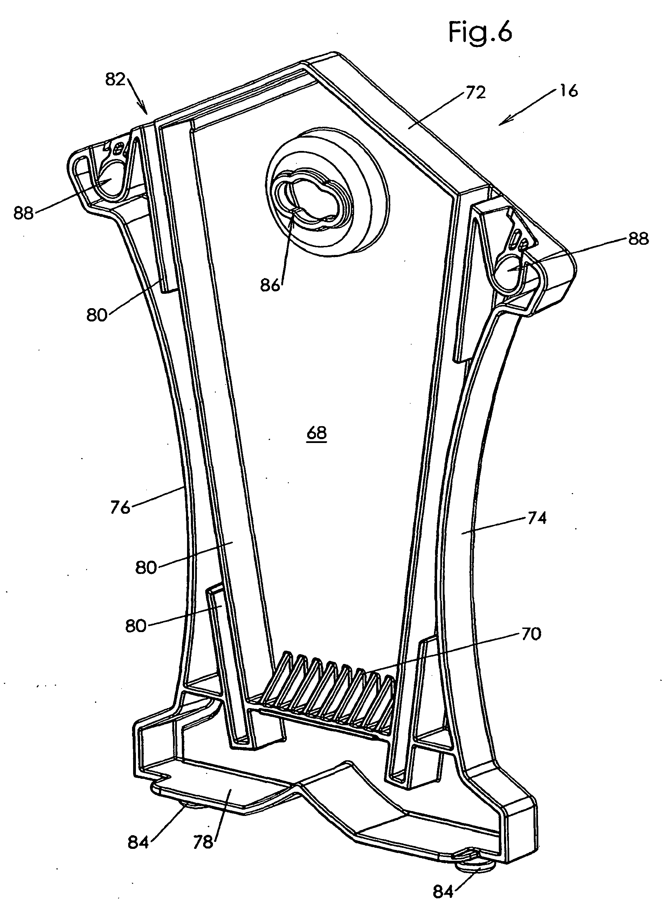

Figure 6 is a perspective view of an end wall;

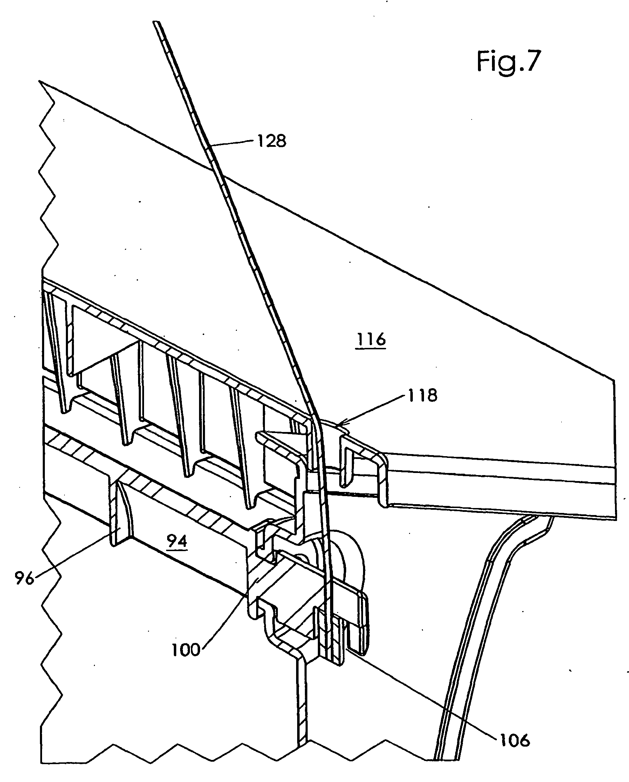

Figure 7 is a detailed view illustrating the end of the upper reinforcing member when in an reinforcing position and the arrangement of the hanging cord;

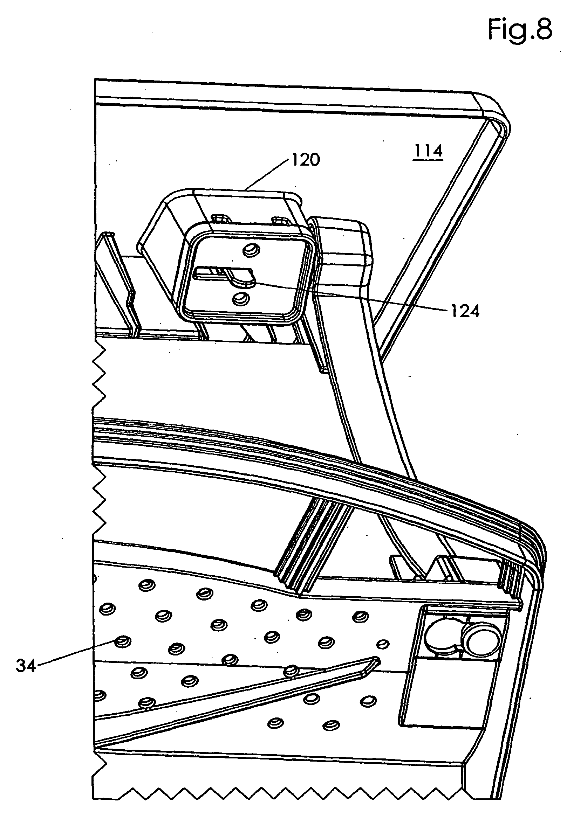

Figure 8 is a partial view illustrating the locking of the end wall to the base and the cover to the end wall;

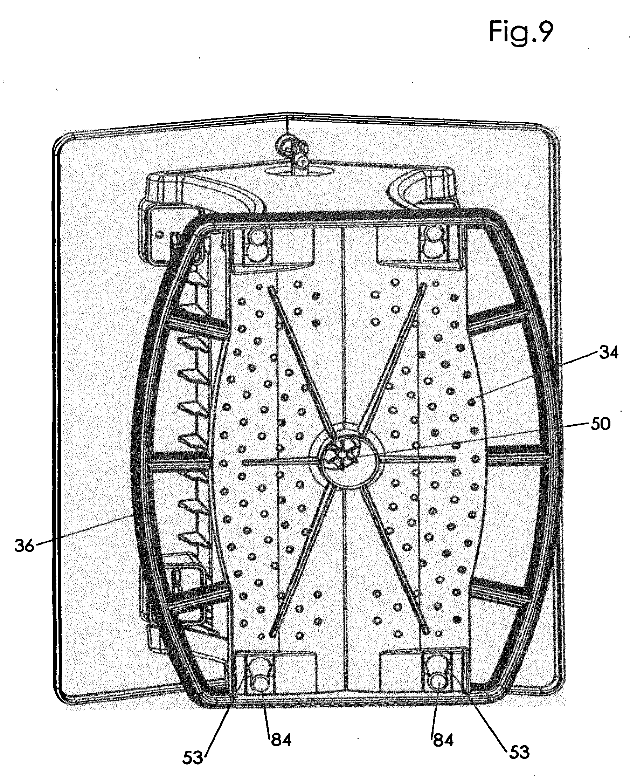

Figure 9 is a bottom perspective view thereof;
Figure 10 is a cross-sectional view of the bottom portion of the bird feeder;

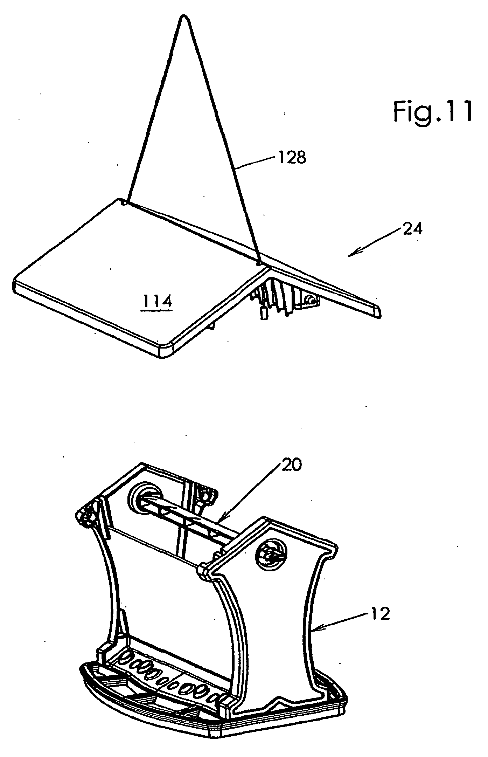

Figure 11 is a perspective view illustrating the roof about to be attached to the bird feeder;

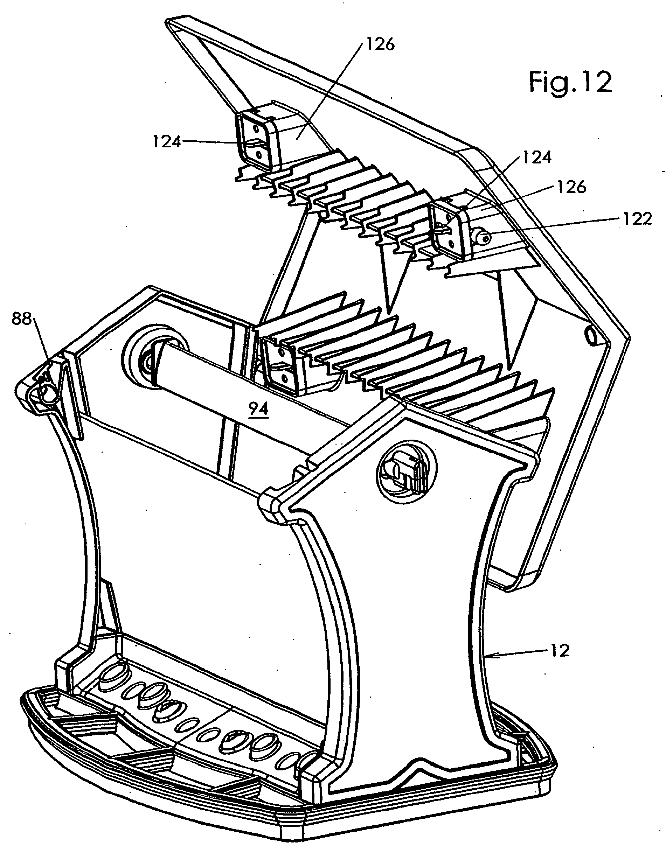

Figure 12 is a perspective view illustrating the rotational movement of the roof to gain access to the feed cavity;

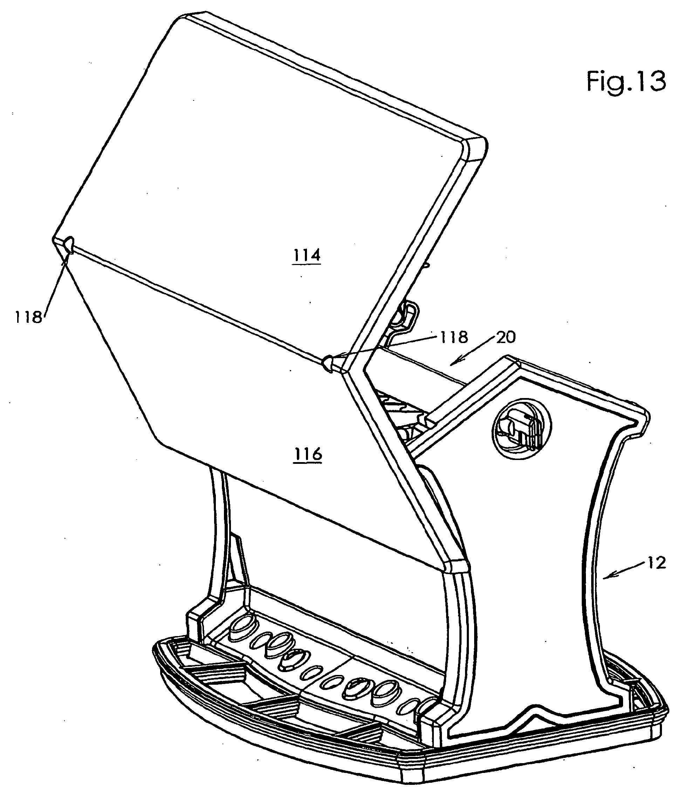

Figure 13 is a perspective view from the opposite side thereof;

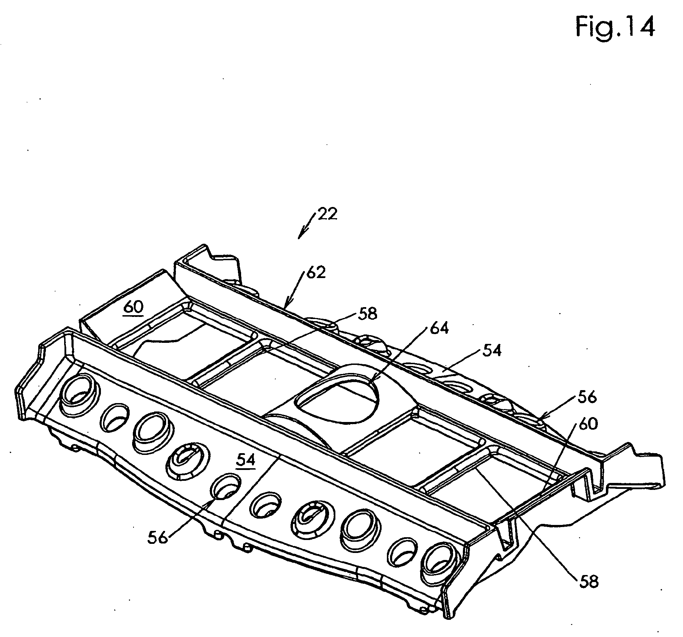

Figure 14 is a top perspective view of the seed guard;

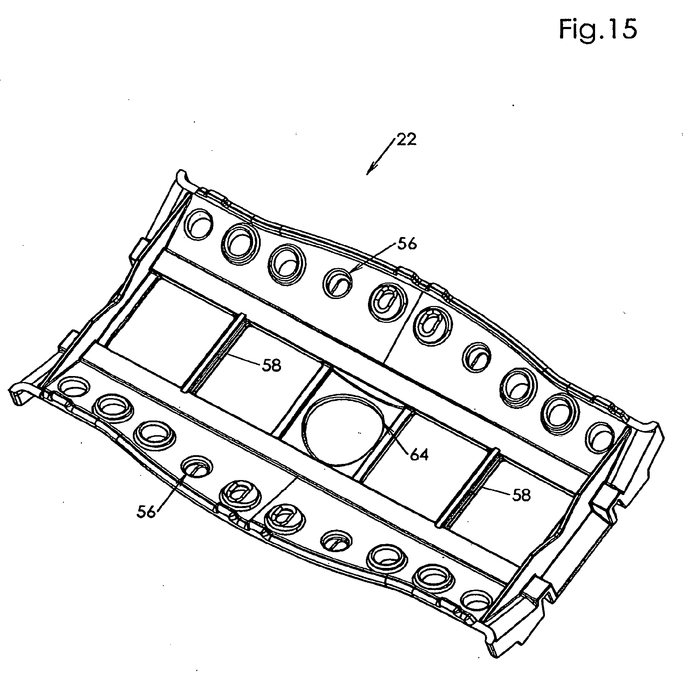

Figure 15 is a bottom perspective view thereof; and

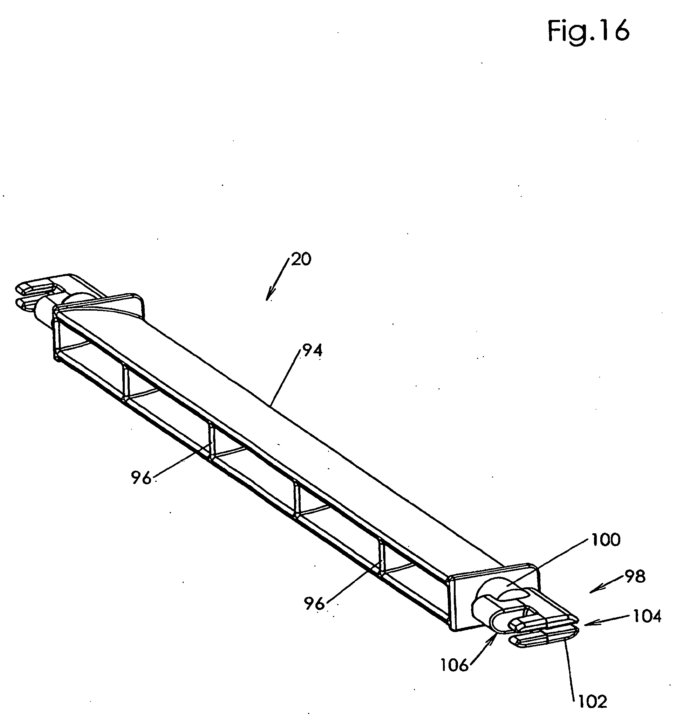

Figure 16 is a perspective view of the upper reinforcing member.

### DETAILED DESCRIPTION OF THE INVENTION

Referring to the drawings in greater detail and by reference characters thereto, there is illustrated a bird feeder generally designated by reference numeral 8 and which is comprised of a base generally designated by reference numeral 10, first and second end walls 12, 14, side walls 16, 18 and an upper reinforcing member generally designated by reference numeral 20. The bird feeder further includes a seed guard generally designated by reference numeral 22 and a cover generally designated by reference numeral 24.

Base 10 has a central area with a raised ridge 28 and with first and second sloping walls 30 and 32 extending downwardly and outwardly therefrom. Sloping walls 30, 32 and the outer portion of the base have drainage apertures 34.

A pair of perches 36, 38 are formed integrally with base 10 and are connected to the central portion by means of ribs 40, 42.

As the bird feeder 8 is symmetrically about both a longitudinal and a traverse axis, at times only one portion will be described in detail with it being understood that the other side or end is a reverse mirror image thereof.

Perch 36 includes a perch top wall 44 and side walls 46. The arrangement is such that perch top wall 44 extends beyond the side walls to provide a gripping portion for the bird whereby the claws can extend under perch top wall 44. The portion is also textured to roughen the surface somewhat.

Base 10 also includes a post receptacle generally designated by reference numeral 48 and which post receptacle 48 includes an inner post 50 formed within post receptacle 48 such that it may receive two different size posts as required. Base 10 also includes raised sides 52 along the periphery of the central portion. Located at the four corners are key holes 53 for reasons which will be apparent hereinbelow.

Seed guard 22 has a centre structure 62 from which there extend a pair of sloping walls 54. Each of sloping walls 54 includes a plurality of apertures 56 therein. A pair of ribs 58 extend between sloping walls 54. Located centrally of seed guard 22 are a pair of sloping end walls 60 designed to guide the seed towards the centre of the tray. Centre structure 62 includes an aperture 64 which is arranged such that seed guard 22 may be placed on the protrusion formed by post receptacle 48. Apertures 56 are shown as being of differing sizes and structure. This is merely to indicate some of the possible arrangements so as to vary the distance between the seed and access thereto. Normally, only one particular size of aperture would be used in a given seed guard depending upon the type of birds one wished to attract.

End wall 12 will now be described in greater detail, again with the understanding that end wall 14 is a mirror image thereof. End wall 12 has a central planar portion 68 with a plurality of ribs 70 for structural strength. End wall 12 includes a top wall 72, a pair of side
walls 74, 76 and a bottom wall 78. There are provided a plurality of vertically extending elements 80 which define a slot 82. A similar structure is provided on the other side of the end wall 14. Extending outwardly from bottom wall 78 are a pair of locking elements 84 which are designed to it within key-holes 53 of base 10.

It will also be noted that there is a generally elliptically shaped aperture 86 provided in the central planar portion 68 at an upper end thereof. There are also provided a pair of recesses 88 for reasons which will be discussed hereinbelow.

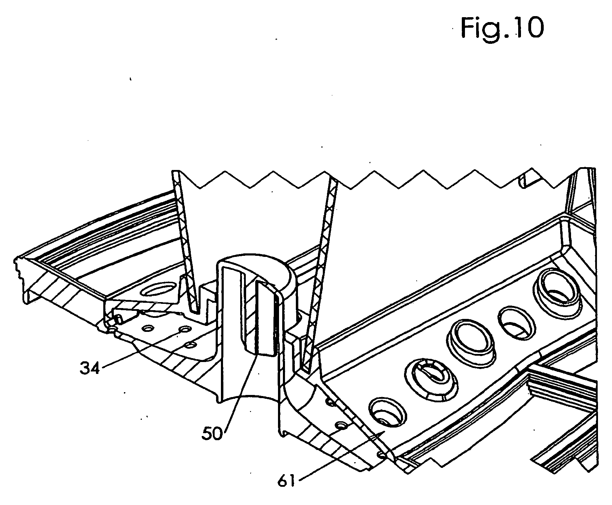

Slots 82 are designed to receive one end of side wall 16, 18. As seen in Figure 10, it will be noted that side walls 16, 18 extend within a channel of seed guard 22. This will prevent any marauders such as squirrels from chewing on the lower marginal edge of side walls 16, 18. The sides are also protected by end walls 12, 14.

Upper reinforcing member 20 provides a central triangular portion 94 having internal ribs 96 formed therein. Located at each end is an end structure 98 which includes a cylindrical portion 100 and end member 102. A slot 104 is provided within end
member 102 as well as a recess 106.

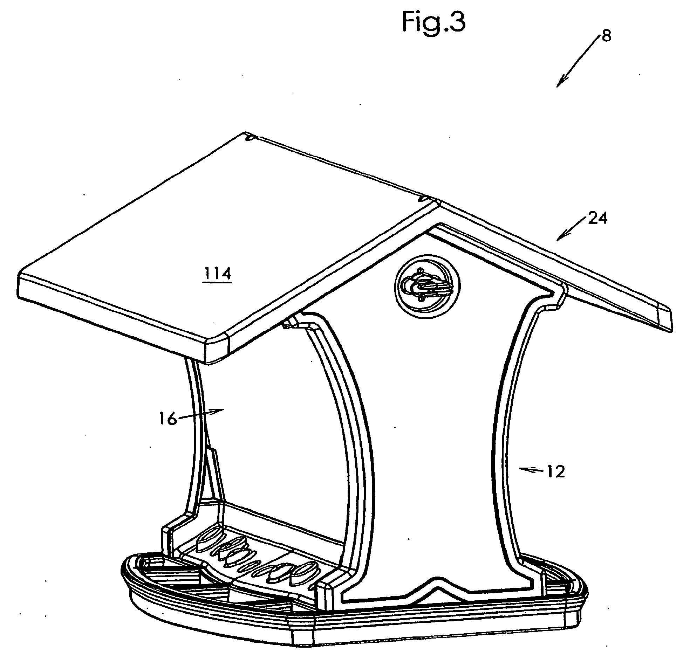

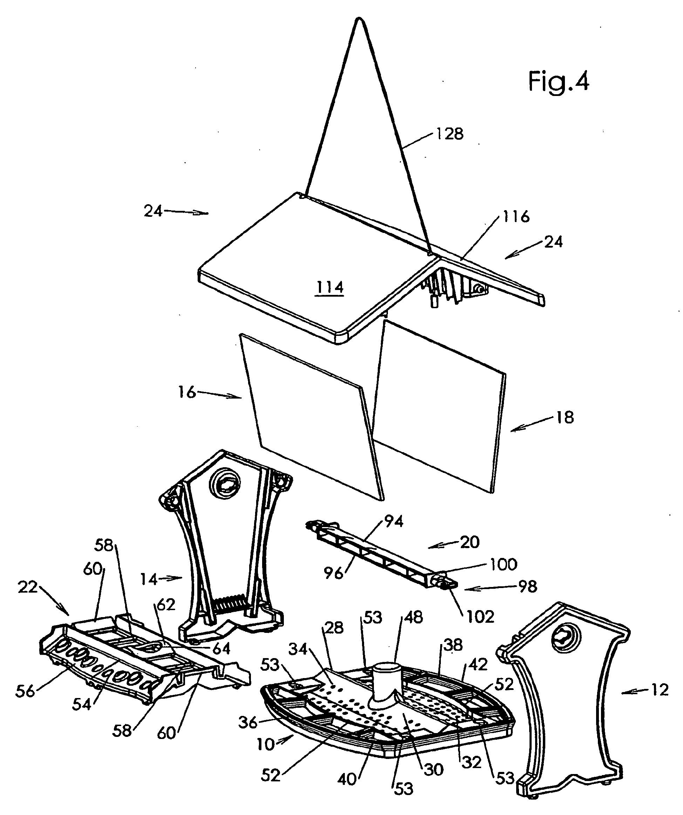

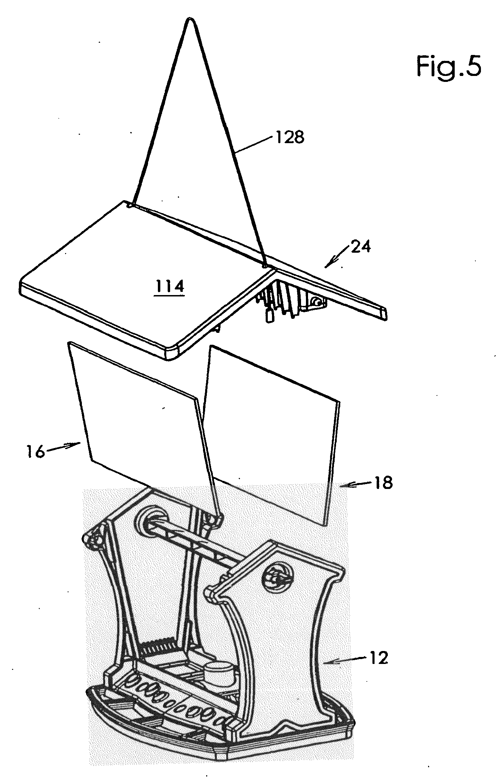

Upper reinforcing member 20 is designed to fit between end walls 12, 14 with the end structure 98 passing through elliptical aperture 86 when upper reinforcing member 20 is in a position wherein in V-shaped triangular portion 94 is in a side position as shown in Figures 3, 4 and 5. After being inserted within elliptical aperture 86, the member can be rotated such that centre triangular portion 94 has an inverted V-shaped configuration. Cylindrical portion 100 locks within the central portion of elliptical aperture 86 to provide the necessary rigidity to the structure and in particular, to the upper portion of end
walls 12, 14. The locking of cylindrical portion 100 may be aided by small protrusions formed on the upper wall surrounding elliptical aperture 86 such that a slight locking of the upper reinforcing member 20 is obtained.

Cover 24 includes a pair of sloping roof panels 114, 116 with apertures 118 formed at each end of the cover 24. These apertures 118 are designed to permit the passage of the hanging cord.

There are provided a pair of locking elements 120 on the underside of one of the roof panels 114, 116. Each locking element 120 comprises a housing 126, interiorly of which there is mounted a slidable shaft 122. A tab member 124 is connected to slidable shaft 122 such that it may be moved inwardly of housing 126 or outwardly thereof. When moved outwardly, shaft 122 is designed to engage one of the recesses 88 in the side wall. Preferably, shafts 122 are biased outwardly by a suitable spring member.

A hanging member or cord 128 is provided and which will engage within recess 106 and pass through slot 104.

The above described hopper type bird feeder provides several advantages. The knockdown nature of the feeder means that it can be readily disassembled without tools and cleaned and sterilized in a dishwasher. The seed guard prevents squirrels from accessing the feed. Furthermore, all parts are protected against chewing by the squirrel. The main components of the feeder can be made of materials which are known in the art. The edges of the side walls which are susceptible to chewing (as they are frequently of a softer material) are protected by the structure shown.

## Claims

1. A hopper type bird feeder (8) comprising:
a base (10) having first and second ends and first and second sides; first and second end walls (12, 14) located proximate said first and second ends of said base (10);
first and second side walls (16, 18) set inwardly of said first and second sides of said base (10) to thereby define a feed access area on said base (10) between said first and second sides and said first and second end walls (12, 14), said first and second side walls (16, 18) having at least a portion thereof spaced upwardly from said base (10);
a feed cavity defined by said base (10) and said first and second end walls (12, 14) and said first and second side walls (16, 18);
and a seed guard (22) extending over said feed access area, said seed guard (22) having at least a portion thereof spaced from said base (10), said seed guard (22) having apertures (56) formed therein
**characterised in that** a structural bar (20) extending between upper portions of said end walls (12, 14), said structural bar (20) comprising at each end an end structure (98) passing through generally elliptical shaped apertures (86) provided in the central planar portion (68) of said end walls (12, 14) and being rotatable mounted within said apertures (86) in said end walls (12, 14) to move from an unlocked position to a locked position wherein said side walls (16, 18) are engageable in slots (82) formed on the interior facing surface of the end walls (12, 14).

2. The bird feeder of claim 1 further comprising a cover (24) extending over said feed cavity, said cover (24) being hingedly connected to said first and second side walls (16, 18).

3. The bird feeder of claim 1 further including first and second perches (36, 38) located on respective sides of said base (10), said perches being integrally formed with said base (10).

4. The bird feeder of claim 1 wherein each of said perches (36, 38) has a top wall (44) and side walls (46), said side walls (46) being spaced inwardly of said top wall (44) to provide a profiled arrangement.

5. The bird feeder of claim 1 further comprising a recess formed within a central portion of said base (10), said recess being designed to accept a post, said recess having a cylindrical structure located therein to accept a second size of post.

6. The bird feeder of claim 1 wherein said side walls (16, 18) each comprise a transparent panel.

7. The bird feeder of claim 1 wherein said side walls (16, 18) are mounted such that a bottom marginal edge thereof is non accessible by a marauder.

8. The bird feeder of claim 1 further including ventilation apertures formed in said base (10).

9. The bird feeder of claim 1 wherein said base (10) has a central ridge with walls sloping downwardly therefrom towards said feed access area.

10. The bird feeder of claim 1 wherein said cover (24) includes locking members (120) to lock said cover (24) to said end walls (12, 14).

11. The bird feeder of claim 1 wherein said end side walls (16, 18) are mounted such that end marginal edges thereof are not accessible by any marauder.

12. The bird feeder of claim 1 wherein said apertures formed in said seed guard (22) have varying sizes and are spaced from the base (10) by varying distances.

13. The bird feeder of claim 12 further including perches, said perches being spaced from said feed cavity by a varying distance.

14. A method for assembling a hopper-type bird feeder (8) formed of a base (10), first and second end walls (12, 14), first and second side walls (16, 18), an upper horizontal structural bar (20) with an end structure (98) at each end and a roof (24), comprising the steps of:
attaching a bottom of one of said end walls (12, 14) to a first end of said base (10);
assembling, in an unlocked position, said end structures (98) of said upper horizontal structural bar (20) in generally elliptical shaped apertures (86) provided in a central planar portion (68 in each of said first and second end walls (12, 14);
attaching a bottom of said second end wall (14) to a second end of said base (10) with said upper horizontal structural bar (20) extending between upper portions of said two end walls (12, 14);
inserting said first and second side walls (16, 18) in slots (82) formed in said first and second end walls (12, 14);
rotating said upper horizontal reinforcing member (20) from an unlocked position to a locked position whereby upper portions of said end walls (12, 14) are locked in position; and
securing said roof (24) to said end walls (12, 14).

## Patentansprüche

1. Vogelfutterhaus (8) vom Trichtertyp, umfassend:
eine Basis (10) mit einem ersten und einem zweiten Ende und einer ersten und einer zweiten Seite; wobei sich eine erste und eine zweite Stirnwand (12, 14) nahe dem ersten und dem zweiten Ende der Basis (10) befindet;
eine erste und eine zweite Seitenwand (16, 18), die von der ersten und der zweiten Seite der Basis (10) aus nach innen versetzt angeordnet sind, um dadurch einen Futterzugangsbereich an der Basis (10) zwischen der ersten und der zweiten Seite und der ersten und der zweiten Stirnwand (12, 14) zu definieren, wobei mindestens ein Abschnitt der ersten und der zweiten Seitenwand (16, 18) nach oben von der Basis (10) beabstandet ist;
einen Futterhohlraum, der durch die Basis (10) und die erste und die zweite Stirnwand (12, 14) und die erste und die zweite Seitenwand (16, 18) definiert ist;
und einen Samenschutz (22), der sich über den Futterzugangsbereich erstreckt, wobei mindestens ein Abschnitt des Samenschutzes (22) von der Basis (10) beabstandet ist, wobei der Samenschutz (22) darin ausgebildete Öffnungen (56) aufweist,
**dadurch gekennzeichnet, dass** sich ein Strukturstab (20) zwischen oberen Abschnitten der Stirnwände (12, 14) erstreckt, wobei der Strukturstab (20) an jedem Ende eine Endstruktur (98) umfasst, die durch im Wesentlichen elliptisch geformte Öffnungen (86) geht, die in dem zentralen planaren Abschnitt (68) der Stirnwände (12, 14) vorgesehen sind und in den Öffnungen (86) in den Stirnwänden (12, 14) drehbar befestigt sind, um sich von einer unverriegelten Position in eine verriegelte Position zu bewegen, wobei die Seitenwände (16, 18) in Schlitze (82) in Eingriff gebracht werden können, die auf der nach innen weisenden Oberfläche der Stirnwände (12, 14) ausgebildet sind.

2. Vogelfutterhaus nach Anspruch 1, ferner umfassend eine Abdeckung (24), die sich über den Futterhohlraum erstreckt, wobei die Abdeckung (24) schwenkbar mit der ersten und zweiten Seitenwand (16, 18) verbunden ist.

3. Vogelfutterhaus nach Anspruch 1, ferner aufweisend eine erste und eine zweite Sitzstange (36, 38), die sich auf jeweiligen Seiten der Basis (10) befinden, wobei die Sitzstangen mit der Basis (10) einstückig ausgebildet sind.

4. Vogelfutterhaus nach Anspruch 1, wobei jede der Sitzstangen (36, 38) eine obere Wand (44) und Seitenwände (46) aufweist, wobei die Seitenwände (46) von der oberen Wand (44) nach innen versetzt angeordnet sind, um eine profilierte Ausgestaltung bereitzustellen.

5. Vogelfutterhaus nach Anspruch 1, ferner umfassend eine Aussparung, die in einem zentralen Abschnitt der Basis (10) ausgebildet ist, wobei die Aussparung zur Aufnahme, eines Pfostens ausgebildet ist, wobei die Aussparung ein zylindrisches Element aufweist, die darin angeordnet ist, um einen Pfosten einer zweiten Größe aufzunehmen.

6. Vogelfutterhaus nach Anspruch 1, wobei die Seitenwände (16, 18) jeweils eine transparente Platte umfassen.

7. Vogelfutterhaus nach Anspruch 1, wobei die Seitenwände (16, 18) derart befestigt sind, dass deren untere Randkante nicht von einem Marodeur zugänglich ist.

8. Vogelfutterhaus nach Anspruch 1, ferner aufweisend Lüftungsöffnungen, die in der Basis (10) ausgebildet sind.

9. Vogelfutterhaus nach Anspruch 1, wobei die Basis (10) eine zentrale Erhebung mit Wänden aufweist, die sich davon ausgehend nach unten zum Futterzugangsbereich neigen.

10. Vogelfutterhaus nach Anspruch 1, wobei die Abdeckung (24) Verriegelungselemente (120) aufweist, um die Abdeckung (24) an den Stirnwänden (12, 14) zu verriegeln.

11. Vogelfutterhaus nach Anspruch 1, wobei die Stirnseitenwände (16, 18) derart befestigt sind, dass deren Endrandkanten nicht von einem Marodeur zugänglich sind.

12. Vogelfutterhaus nach Anspruch 1, wobei die Öffnungen, die in dem Samenschutz (22) ausgebildet sind, variierende Größen aufweisen und mit unterschiedlichen Abständen von der Basis (10) beabstandet sind.

13. Vogelfutterhaus nach Anspruch 12, ferner aufweisend Sitzstangen, wobei die Sitzstangen von dem Futterhohlraum um einen variierenden Abstand beabstandet sind.

14. Verfahren zum Montieren eines Vogelfutterhauses (8) vom Trichtertyp, das aus einer Basis (10), einer ersten und einer zweiten Stirnwand (12, 14), einer ersten und einer zweiten Seitenwand (16, 18), einem oberen horizontalen Strukturstab (20) mit einer Endstruktur (98) an jedem Ende und einem Dach (24) gebildet ist, umfassend die folgenden Schritte:
Befestigen einer Unterseite einer der Stirnwände (12, 14) an einem ersten Ende der Basis (10);
Montieren, in einer unverriegelten Position, der Endstrukturen (98) des oberen horizontalen Strukturstabs (20) in im Wesentlichen elliptisch geformten Öffnungen (86), die in einem zentralen planaren Abschnitt (68) in jeder der ersten und der zweiten Stirnwand (12, 14) vorgesehen sind;
Befestigen einer Unterseite der zweiten Stirnwand (14) an einem zweiten Ende der Basis (10), wobei sich der horizontale Strukturstab (20) zwischen oberen Abschnitten der zwei Stirnwände (12, 14) erstreckt;
Einführen der ersten und der zweiten Seitenwand (16, 18) in Schlitze (82), die in der ersten und der zweiten Stirnwand (12, 14) ausgebildet sind;
Drehen des oberen horizontalen Verstärkungselements (20) von einer unverriegelten Position in eine verriegelte Position, wobei obere Abschnitte der Stirnwände (12, 14) arretiert werden; und
Sichern des Dachs (24) an den Stirnwänden (12, 14).

## Revendications

1. Mangeoire pour oiseaux de type trémie (8) comprenant :
une base (10) ayant une première et seconde extrémité et un premier et un second côté ;
une première et une seconde paroi d'extrémité (12, 14) situées à proximité desdites premières et secondes extrémité de ladite base (10) ;
une première et seconde parois latérales (16,18) placées vers l'intérieur desdits premiers et seconds côtés de ladite base (10) pour définir ainsi une zone d'accès à la nourriture sur ladite base (10) entre lesdits premier et second côté et lesdites première et seconde paroi d'extrémité (12, 14), lesdites premières et secondes parois latérales (16, 18) ayant au moins une portion espacée vers le haut à partir de ladite base (10) ;
une cavité d'alimentation définie par ladite base (10) et lesdites premières et secondes paroi d'extrémité (12, 14) et lesdites premières et secondes parois latérales (16, 18) ;
et un garde de graines (22) s'étendant au-dessus de ladite zone d'accès à la nourriture, ledit garde de graines (22) ayant au moins une portion espacée de ladite base (10), ledit garde de graines (22) ayant des ouvertures (56) formées dans celui-ci,
**caractérisé par** une barre structurelle (20) s'étendant entre des portions supérieures desdites parois d'extrémité (12, 14), ladite barre structurelle (20) comprenant à chaque extrémité une structure d'extrémité (98) passant à travers des ouvertures de forme généralement elliptique (86) prévues dans la portion planaire centrale (68) desdites parois d'extrémité (12, 14) et étant montée de manière rotative à l'intérieur desdites ouvertures (86) dans lesdites parois d'extrémité (12, 14) pour se déplacer d'une position déverrouillée à une position verrouillée dans laquelle lesdites parois latérales (16, 18) peuvent venir en prise dans des fentes (82) formée sur la surface faisant face à l'intérieur des parois d'extrémité (12, 14).

2. Mangeoire pour oiseaux selon la revendication 1, comprenant en outre un couvercle (24) s'étendant au-dessus de ladite cavité d'alimentation, ledit couvercle (24) étant raccordé par charnière auxdites premières et secondes parois latérales (16, 18).

3. Mangeoire pour oiseaux selon la revendication 1 incluant en outre une première et une seconde perche (36, 38) située sur le côté respectif de ladite base (10), lesdites perches étant formées en un seul tenant avec ladite base (10).

4. Mangeoire pour oiseaux selon la revendication 1, dans lequel chacune desdites perche (36, 38) a une paroi de sommet (44) et des parois latérales (46), lesdits parois latérales (46) étant espacées vers l'intérieur de ladite paroi de sommet (44) pour fournir un agencement profilé.

5. Mangeoire pour oiseaux selon la revendication 1 comprenant en outre un évidement formé à l'intérieur d'une portion centrale de ladite base (10), ledit évidement étant conçu pour recevoir un montant, ledit évidement ayant une structure cylindrique située dans celui-ci pour accepter une seconde taille de montant.

6. Mangeoire pour oiseaux selon la revendication 1, dans laquelle lesdites parois latérales (16, 18) comprennent chacune un panneau transparent.

7. Mangeoire pour oiseaux selon la revendication 1, dans laquelle lesdites parois latérales (16, 18) sont montées de telle sorte qu'un bord marginal de base de ces dernières ne soit pas accessible par un voleur.

8. Mangeoire pour oiseaux selon la revendication 1 incluant en outre des ouvertures de ventilation formées dans ladite base (10).

9. Mangeoire pour oiseaux selon la revendication 1, dans lequel ladite base (10) a une crête centrale avec des parois inclinées vers le bas dans la direction de ladite zone d'accès à la nourriture.

10. Mangeoire pour oiseaux selon la revendication 1, dans laquelle ledit couvercle (24) inclut de verrouiller des éléments (120) pour verrouiller ledit couvercle (24) auxdites parois d'extrémité (12, 14).

11. Mangeoire pour oiseaux selon la revendication 1, dans laquelle lesdites parois latérales d'extrémité (16, 18) sont montées de telle sorte qu'un bord marginal d'extrémité de ces dernières ne soit pas accessible par un voleur.

12. Mangeoire pour oiseaux selon la revendication 1, dans lequel lesdites ouvertures formées dans le dit garde de graines (22) ont des tailles variables et sont espacées de la base (10) par des distances variables.

13. Mangeoire pour oiseaux selon la revendication 12, incluant en outre des perches, lesdites perches étant espacées de ladite cavité d'alimentation par une distance variable.

14. Procédé d'assemblage d'une mangeoire pour oiseaux de type trémie (8) formée d'une base (10), une première et seconde paroi d'extrémité (12, 14), une première et seconde parois latérale (16, 18), une barre structurelle horizontale supérieure (20) avec une structure d'extrémité (98) à chaque extrémité et un toit (24), comprenant les étapes consistant à :
fixer une base d'une desdites parois d'extrémité (12, 14) a une première extrémité de ladite base (10) ;
assembler dans une position déverrouillée lesdites structures d'extrémité (98) de ladite barre structurelle horizontale supérieure (20) dans des ouvertures de forme généralement elliptique (86) fournies dans une portion planaire centrale (68) dans chacune desdites première et seconde paroi d'extrémité (12, 14) ;
fixer une base de ladite seconde paroi d'extrémité (14) à une seconde extrémité de ladite base (10) avec ladite barre structurelle horizontale supérieure (20) s'étendant entre des portions supérieures desdites deux parois d'extrémité (12, 14) ;
insérer lesdites première et seconde parois d'extrémité (16, 18) dans des fentes (82) formées dans lesdites première et seconde paroi latérale (12, 14) ;
tourner ledit élément de renforcement horizontal supérieur (20) d'une position déverrouillée à une position verrouillée, moyennant quoi des portions supérieures desdites parois d'extrémité (12, 14) sont verrouillées en position ; et
fixer ledit toit (24) auxdites parois d'extrémité (12, 14).
